# FASCICULE DE BREVET EUROPEEN

(11) **EP 1 053 111 B1**
(45) Date de publication et mention de la délivrance du brevet: **30.01.2002**
(21) Numéro de dépôt: 98954457.2
(22) Date de dépôt: 28.10.1998
(51) Int. Cl.: B60C 15/00, B60C 15/024, B60C 15/02, B60C 3/04

(54) **BOURRELET SANS TRINGLE POUR PNEUMATIQUE**
KERNLOSER WULST FÜR REIFEN
TYRE BEAD WITHOUT BEAD CORE

(30) Priorité: 14.11.1997 FR 9714409
(43) Date de publication de la demande: 22.11.2000
(73) Titulaire: Compagnie Générale des Etablissements MICHELIN-MICHELIN & CIE, 63040 Clermont-Ferrand Cedex 09 (FR)
(72) Inventeur: BILLIERES, Jean, F-63100 Clermont-Ferrand (FR); DURIF, Pierre, F-63530 Enval (FR)
(74) Mandataire: Devaux, Edmond-Yves
(86) Numéro de dépôt international: EP9806832
(87) Numéro de publication internationale: WO9925572

(56) Documents cités:
- WO-A-96/17734
- CH-A- 350 887
- DE-C- 19 537 188
- FR-A- 1 515 950

## Description

L'invention concerne un pneumatique comprenant au moins une bande de roulement réunie à deux bourrelets par l'intermédiaire de deux flancs et une armature de carcasse, ledit pneumatique pouvant être utilisé avec ou sans chambre à air indépendante et destiné, après montage sur une jante normalisée et gonflage, à l'équipement de tout véhicule susceptible de rouler.

Les pneumatiques peuvent être montés sur plusieurs types de jante normalisées. Lesdites jantes peuvent posséder des sièges tronconiques inclinés par rapport à l'axe de rotation en faisant avec ledit axe un angle pouvant être compris entre 4° et 16°. Parmi ces dernières, il existe des jantes monobloc qui sont alors dites jantes creuses, semi-creuses ou encore à base creuse, ou des jantes en plusieurs parties qui sont dites intérimaires ou "advanced". Les jantes concemées peuvent aussi posséder des sièges de jante parallèles à l'axe de rotation et sont généralement à dites à fond plat.

Les jantes les plus souvent utilisées, dites creuses ou à base creuse, comportent une gorge de montage dont le diamètre est nettement inférieur au diamètre nominal de la jante. Ce diamètre de gorge de jante est considéré par les utilisateurs comme trop petit, et il ne permet pas de choisir des tambours de freins de dimensions adaptées à un freinage efficace d'un véhicule de plus en plus puissant.

Il est par ailleurs hautement souhaitable, quelles qu'en fussent les raisons (diminuer les pressions exercées par le pneumatique sur le sol, augmenter la raideur transversale du pneumatique, augmenter l'espace intérieur disponible de la jante, abaisser le centre de gravité de certains engins, pour n'en citer que quelques unes), de réaliser des pneumatiques dont le rapport de forme H/S, H étant la hauteur du pneumatique sur jante et S sa largeur axiale maximale, est diminué.

La mise au point de pneumatiques avec des rapports de forme diminués, plus particulièrement destinés à l'équipement de véhicules du type "Poids-Lourds", tels que camions, autobus, métropolitains et ensembles tracteurs-remorques, ou du type très gros "Poids-Lourds", tels que les engins de chargement, de transport et de terrassement utilisés en Génie Civil, ou les engins aériens, est très délicate ; en particulier, l'endurance des bourrelets devient nettement moindre au fur et à mesure que le rapport H/S diminue, les insuffisances de l'endurance se situant au niveau des extrémités de retournements de l'armature de carcasse ou des extrémités de nappes de renforcement localisées dans les bourrelets du pneumatique, l'architecture desdits bourrelets étant une architecture usuelle avec, dans chaque bourrelet, un retournement d'armature de carcasse et des nappes de renforcement dont les profils méridiens sont sensiblement parallèles au profil méridien de l'armature de carcasse dans la zone desdits bourrelets. En outre de tels rapports de forme entraînent, malgré l'abaissement possible des pressions de gonflage, un manque de confort notable, ce qui peut être parfaitement insupportable dans le cas de pneumatiques effectuant de longs trajets sur des routes plus ou moins bosselées.

Afin de remédier à de tels inconvénients et de faciliter la fabrication des pneumatiques, le document WO 96/17734, correspondant au préambule de la revendication 1, propose un pneumatique de rapport de forme inférieur à 0,8 et destiné à être monté sur une jante creuse ou à base creuse dont les sièges sont inclinés par rapport à l'axe de rotation d'un angle pouvant être compris entre 4° et 16°. Ledit pneumatique a une armature de carcasse, surmontée radialement d'une armature de sommet, l'armature de carcasse étant composée d'au moins une nappe de fils ou câbles et étant retournée dans chaque bourrelet autour d'une tringle d'ancrage en allant de l'extérieur à l'intérieur pour former un retoumement, ledit retournement étant renforcé par au moins une nappe de renforcement additionnelle de câbles métalliques, orientés par rapport à la direction circonférentielle d'un angle compris entre 0° et 20°, la valeur 0° étant incluse dans ledit intervalle, et le profil méridien dudit retournement renforcé étant, dans le pneumatique non monté sur jante, sensiblement parallèle au profil méridien d'au moins la portion de siège située axialement à l'intérieur de la projection du centre du cercle circonscrit à la tringle sur ledit siège de jante.

Bien que les méthodes de fabrication d'un pneumatique soient actuellement très élaborées, l'utilisation de tringles requièrent une fabrication et un traitement séparés desdites tringles (enrobage par exemple), le transport et la mise en place des mêmes tringles sur un tambour de confection ou sur un support donné en vue de la fabrication du bourrelet, autant d'opérations qui nécessitent du temps, des précautions multiples et qui sont donc coûteuses. En outre, les pneumatiques actuels étant soumis à des couples moteur de plus en plus importants, le compromis entre serrage sur jante nécessaire pour éviter les rotations intempestives et serrage maximal pour permettre le montage sur jante. est difficilement maîtrisable par l'homme de l'art dans les architectures actuelles de pneumatiques avec tringles, autour desquelles est enroulée une armature de carcasse.

La demanderesse a constaté, de manière inattendue, que la répartition des pressions de contact, entre la jante et le pneumatique au niveau des sièges respectifs de jante et de bourrelet, pouvait être maîtrisée et rendue la plus régulière possible de façon plus simple et plus reproductible, tout en permettant l'amélioration de la résistance au déroulement d'armature de carcasse dans le cas d'échauffement élevé des bourrelets.

Ainsi, le pneumatique, conforme à l'invention et destiné à être monté sur une jante normalisée de largeur axiale L, avec des rebords de jante avec crochets arrondis, comprenant une bande de roulement réunie à deux bourrelets par deux flancs et au moins une armature de carcasse formée d'au moins une nappe d'éléments de renforcement, est caractérisé, vu en section méridienne, en ce que chaque bourrelet est dépourvu de tringle, ladite armature de carcasse ayant dans chaque bourrelet un profil méridien courbé et formé en allant axialement et radialement de l'extérieur à l'intérieur d'au moins un arc de cercle BC convexe éventuellement prolongé tangentiellement par un segment de droite CD, pour constituer un bord d'armature de carcasse dans le bourrelet, localisé dans un angle aigu ouvert axialement et radialement vers l'intérieur dont l'un des côtés est parallèle à l'axe de rotation et de valeur au plus égale à 25°, ladite armature de carcasse étant, dans chaque bourrelet, au moins radialement à l'extérieur et axialement à l'intérieur renforcée par une première couche additionnelle continue, de profil méridien sensiblement parallèle au profil méridien de ladite armature de carcasse dans le bourrelet et comportant au moins une première partie composée d'au moins une nappe formée d'éléments de renforcement inextensibles faisant avec la direction circonférentielle un angle compris entre- 2,5° et + 2,5°, l'extrémité radialement supérieure de ladite première partie de la nappe additionnelle étant distante de l'axe de rotation d'une quantité au moins égale à 0,96 fois la distance séparant dudit axe le point du rebord correspondant de la jante de montage le plus éloigné dudit axe de rotation et l'extrémité axialement intérieure étant distante du plan équatorial d'une quantité au plus égale à 0,43 fois la largeur L de la jante de montage.

Il faut entendre par rebord de jante, vu en section méridienne, l'ensemble formé par la partie sensiblement perpendiculaire à l'axe de rotation prolongée d'une part, radialement à l'extérieur, par une partie circulaire, formant ce qui est appelé parfois le crochet de jante, et d'autre part. radialement à l'intérieur. par l'arc de cercle de raccordement à l'extrémité axialement extérieure du siège de jante audit ensemble.

Par profil méridien d'une armature de carcasse dans un bourrelet, il faut entendre le profil méridien de la fibre géométriquement moyenne de ladite armature, vue en section méridienne, ledit profil étant considéré radialement à l'intérieur d'une droite parallèle à l'axe de rotation de la jante de montage et du pneumatique passant par le point du crochet de jante, correspondant au bourrelet considéré, le plus éloigné de l'axe de rotation.

Il faut entendre par élément de renforcement inextensible un câble ou un monofilament, présentant sous une force de 20% de la force de rupture un allongement relatif au plus égal à 1,5%. La couche additionnelle sera préférentiellement formée de câbles ou monofilaments métalliques, et de préférence en acier, dans le cas de pneumatiques de type "Poids-Lourds" ou "Génie Civil", mais pourra être avantageusement formée d'éléments textiles, de préférence en polyamide aromatique, dans le cas de pneumatiques pour Avions, Tracteurs agricoles ou pour voitures de Tourisme par exemple.

Un nombre important de jantes et de pneumatiques pouvant être concernés par l'invention, le profil méridien de l'ensemble formé par l'armature de carcasse et la première couche additionnelle, profil très étroitement lié au profil de l'armature de carcasse, sera, dans un bourrelet, avantageusement adapté au profil méridien du côté de la jante sur lequel sera monté ledit bourrelet. Le profil méridien de la nappe additionnelle ne diffère, en effet, du profil méridien de l'armature de carcasse que par la variation possible de la couche caoutchouteuse de découplage existante entre les deux armatures, ce qui explique que les deux profils sont dits sensiblement parallèles.

Ledit profil méridien d'armature de carcasse dans un bourrelet peut avantageusement être complété, radialement et axialement vers l'intérieur, par un premier arc de cercle concave prolongé tangentiellement par le deuxième arc de cercle convexe, ledit deuxième arc de cercle étant éventuellement prolongé tangentiellement par un segment de droite.

L'extrémité radialement extérieure du premier arc de cercle concave est radialement distante de l'axe de rotation d'une quantité égale au rayon du cercle lieu géométrique des points du rebord de jante les plus éloignés dudit axe. Ladite extrémité radialement extérieure est aussi le point de tangence avec le profil méridien convexe de l'armature de carcasse dans le flanc. Le centre de courbure du premier arc de cercle a, par rapport aux deux axes que sont la trace du plan équatorial et l'axe de rotation, les mêmes coordonnées que le centre de courbure du crochet de jante. Quant à la longueur dudit premier arc de cercle de profil d'armature de carcasse, elle est au minimum nulle, le profil méridien d'armature de carcasse dans le bourrelet commençant directement par le deuxième arc de cercle convexe, et au maximum égale à la longueur d'un arc de cercle dont l'extrémité radialement inférieure serait le point de tangence dudit arc avec une perpendiculaire à l'axe de rotation.

Ledit premier arc de cercle est tangentiellement prolongé radialement et axialement à l'intérieur par un deuxième arc de cercle de rayon de courbure pouvant être compris entre une valeur minimale de 5 mm et une valeur maximale égale au rayon de courbure du profil méridien d'armature de carcasse dans le flanc mesuré au point de tangence entre ledit profil et le premier arc de cercle. ladite valeur maximale étant la valeur de rayon utilisée préférentiellement lorsque le premier arc de cercle a une longueur nulle.

Le deuxième arc de cercle est éventuellement tangentiellement prolongé radialement et axialement à l'intérieur par un segment de droite, dont l'extrémité axialement intérieure est aussi l'extrémité du profil méridien d'armature de carcasse. Le bord axialement intérieur du profil méridien est composé soit d'une partie du deuxième arc de cercle à laquelle s'ajoute le segment de droite, soit d'une partie d'arc de cercle. Ledit bord est la partie de profil méridien localisée dans un angle définie par une demi-droite tangente au deuxième arc de cercle et faisant avec l'axe de rotation un angle de 25° et une demi-droite parallèle audit axe de rotation dont l'origine est précisément le point de tangence du deuxième arc de cercle avec la demi-droite orientée à 25°.

La première couche additionnelle a une extrémité axialement intérieure pouvant être plus proche ou plus éloignée du plan équatorial que l'extrémité axialement intérieure de l'armature de carcasse. Entre son extrémité axialement intérieure et le sommet de l'angle dans lequel est localisé le bord du profil méridien de l'armature de carcasse, la première couché additionnelle peut être séparée de l'armature de carcasse par une faible épaisseur de mélange caoutchouteux, somme des deux épaisseurs respectives des couches de calandrage des deux nappes adjacentes, alors qu'entre ledit sommet et l'extrémité radialement supérieure, ladite épaisseur est comprise entre 1.0 et 1.8 fois l'épaisseur citée précédemment.

Comme décrit ci-dessus, certains pneumatiques pourront avoir une armature de carcasse formée d'éléments textiles. L'extrémité du profil méridien d'armature de carcasse peut alors ne pas être confondue avec l'extrémité de ladite armature. cette dernière pouvant être retournée sur la première couche additionnelle.

Dans le cas de pneumatiques dont la pression de gonflage recommandée est élevée, la première couche additionnelle peut être formée de deux parties de plusieurs nappes additionnelles d'éléments de renforcements inextensibles, superposées les unes aux autres et dont les longueurs pourront être égales ou non. Si la présence d'éléments inextensibles est nécessaire pour toute la première partie de la couche additionnelle située radialement à l'intérieur d'une droite parallèle à l'axe de rotation et située à une distance dudit axe égale à 0,96 fois la distance séparant dudit axe le point du rebord correspondant de la jante de montage le plus éloigné dudit axe de rotation, l'éventuelle deuxième partie de couche additionnelle prolongeant la première partie, située radialement à l'extérieur de ladite droite, et donc dans le bourrelet et même dans le flanc du pneumatique, peut être formée d'éléments de renforcement soit inextensibles, soit présentant une certaine extensibilité ou du moins rendant ladite partie extensible ; ainsi pourront être utilisés pour ladite partie des éléments continus, de préférence métalliques et dits élastiques, c'est-à-dire ayant sous une force de tension égal à 20% de la force de rupture un allongement relatif au moins égal à 1,5%, ou des éléments ondulés ou en zigzag dans le plan de la ou des nappes composant la couche, ou encore d'éléments discontinus circonférentiellement, chaque élément ayant une longueur circonférentielle pouvant être comprise entre 0,1 fois et 1 fois la longueur circonférentielle de la nappe et les espaces entre éléments étant décalés méridiennement par rapport aux espaces des rangées axialement adjacentes.

Dans le cas d'une pression de gonflage élevée, la présence d'une deuxième couche additionnelle continue de renforcement peut aussi s'avérer très avantageuse. Ladite deuxième couche, axialement à l'extérieur et radialement à l'intérieur d'au moins la nappe radialement la plus intérieure et axialement la plus extérieure de l'armature de carcasse, a aussi un profil méridien sensiblement parallèle au profil méridien de ladite armature de carcasse dans le bourrelet. Ladite couche est formée d'au moins une nappe d'éléments de renforcement. Elle peut être continue et homogène sur toute sa longueur depuis son extrémité radialement supérieure pouvant être située radialement à l'extérieur, mais de préférence radialement à l'intérieur, de la droite parallèle à l'axe de rotation de la jante et passant par le point du rebord de jante, correspondant au bourrelet considéré, le plus éloigné de l'axe de rotation, jusqu'à son extrémité axialement intérieure et la plus proche du plan équatorial. Elle est alors avantageusement formée de câbles inextensibles, de préférence métalliques, et faisant avec la direction circonférentielle un angle compris entre -2,5° et +2,5°. La deuxième couche additionnelle peut être aussi non homogène sur sa largeur bien que continue : elle est alors formée de deux parties, ou de trois parties.

Dans le cas où son extrémité radialement supérieure est radialement à l'intérieur de la droite parallèle à l'axe de rotation et passant par le point du rebord de jante le plus éloigné dudit axe de rotation, ladite deuxième couche comprend une première partie comprise entre son extrémité radialement supérieure et un point situé entre le milieu du deuxième arc de cercle du profil méridien d'armature de carcasse dans le bourrelet et le sommet de l'angle α dans lequel est située le bord d'armature de carcasse, et une deuxième partie, prolongeant axialement à l'intérieur et radialement à l'intérieur la première partie et comprise entre ledit point et son extrémité radialement inférieure et axialement la plus proche du plan équatorial. La première partie est formée d'au moins une nappe de câbles inextensibles, alors que la deuxième partie est avantageusement formée d'au moins une nappe d'éléments de renforcement, ladite nappe présentant les propriétés d'être très peu compressible dans le sens transversal et avantageusement extensible dans le sens circonférentiel, ce qui, d'une part, permet la maîtrise simple et reproductible des pressions exercées par le siège de bourrelet sur le siège de jante, les inventeurs ayant constaté de manière inattendue que lesdites pressions étaient fonction de la résistance à la tension des éléments de renforcement constituant la (les) nappe(s) de la deuxième partie de la deuxième couche additionnelle, et d'autre part, facilite la pose en fabrication de ladite couche additionnelle.

Dans le cas où l'extrémité radialement supérieure de la deuxième couche additionnelle est radialement à l'extérieur de la droite parallèle à l'axe de rotation et passant par le point du rebord de jante le plus éloigné dudit axe de rotation, la deuxième couche peut comprendre alors, en plus des première et deuxième parties décrites précédemment, une troisième partie sensiblement située radialement au dessus de la droite parallèle à l'axe de rotation et passant par le point du rebord de jante correspondant le plus éloigné dudit axe de rotation.

La première partie est formée d'au moins une nappe de câbles inextensibles, de préférence métalliques en acier, et faisant avec la direction circonférentielle un angle compris entre -2,5° et +2,5°. La deuxième partie est avantageusement formée d'au moins une nappe d'éléments de renforcement, ladite nappe présentant les propriétés d'être très peu compressible dans le sens transversal et avantageusement extensible dans le sens circonférentiel, ce qui, d'une part, permet la maîtrise simple et reproductible des pressions exercées par le siège de bourrelet sur le siège de jante, les inventeurs ayant constaté de manière inattendue que lesdites pressions étaient fonction de la résistance à la tension des éléments de renforcement constituant la (les) nappe(s) de la deuxième partie de la deuxième couche additionnelle, et d'autre part, facilite la pose en fabrication de ladite couche additionnelle. Quant à la troisième partie, elle est avantageusement formée d'au moins une nappe d'éléments de renforcement, ladite nappe présentant la propriété d'être extensible dans le sens circonférentiel.

La (les) nappe(s) des deuxième et troisième parties de la deuxième couche additionnelle pourront ainsi être formées d'éléments de renforcement élastiques, continus, rectilignes et orientés circonférentiellement, lesdits éléments de renforcement étant de préférence métalliques ou textiles, comme les éléments cités précédemment et utilisés pour la deuxième partie de la première couche additionnelle. Elles pourront être formées d'éléments de renforcement ondulés ou en zigzag d'orientation moyenne circonférentielle, soit de rangées d'éléments de renforcement discontinus, avec les mêmes caractéristiques que celles citées précédemment, lesdits éléments ou rangées d'éléments étant cependant dans ce cas parallèles entre eux et pratiquement jointifs dans le sens transversal. La (les) nappe(s) de ladite deuxième partie peuvent aussi être formées d'éléments de renforcement métalliques orientés par rapport à la direction circonférentielle d'un angle au moins égal à 80°, lesdits éléments étant circonférentiellement séparés entre eux par une distance au moins égale à 0,2 mm. Il peut être avantageux dans ce dernier cas de prévoir une (des) largeur(s) de ladite (desdites) nappe(s) suffisante(s) pour pouvoir la (les) retourner sur l'extrémité de l'armature de carcasse. En outre, la pose de la deuxième partie de la deuxième couche peut être encore facilitée si la (les) nappe(s) de ladite partie sont formées de bandes de quelques éléments de renforcement circonférentiels, bandes discontinues circonférentiellement, les espaces de discontinuité entre bandes faisant avec la direction circonférentielle un angle différent de l'angle fait avec la même direction par les éléments de renforcement d'armature de carcasse, la différence étant au moins égale à 10°.

Dans le cas où l'armature de carcasse est formée d'au plus trois nappes, la deuxième couche additionnelle, quelque soit le nombre de nappes qui existent et quelle que soit la nature des éléments qui la composent, est préférentiellement en totalité située axialement à l'extérieur et radialement à l'intérieur de l'armature de carcasse. Dans le cas où l'armature de carcasse est formée d'au moins quatre nappes, les nappes qui forment la deuxième couche additionnelle sont telles que deux d'entre elles peuvent avantageusement enserrer un groupe pouvant être formée de une, deux ou trois nappes d'armature de carcasse.

Les caractéristiques et avantages de la présente invention seront mieux comprises à l'aide de la description qui suit et qui se réfère au dessin, sur lequel :
la figure 1 représente schématiquement, vu en section méridienne, un bourrelet de pneumatique pour tracteur agricole conforme à l'invention,
- la figure 2 représente schématiquement, vu en section méridienne, un bourrelet de pneumatique pour véhicule de tourisme conforme à l'invention,
- la figure 3 représente schématiquement, vu en section méridienne, un bourrelet de pneumatique pour pneumatique "Poids-Lourds",
- la figure 4 représente schématiquement, vu en section méridienne, un bourrelet de pneumatique pour engin de Génie Civil, conformé à l'invention,
- les figures 5A à 5C sont relatives à un bourrelet de pneumatique pour Avion, la figure 5A représentant schématiquement une première variante de bourrelet pour pneumatique radial, la figure 5B étant une vue en plan de la deuxième couche additionnelle utilisée dans le cas de la figure 5A, et la figure 5C représentant schématiquement une deuxième variante de bourrelet pour pneumatique croisé.

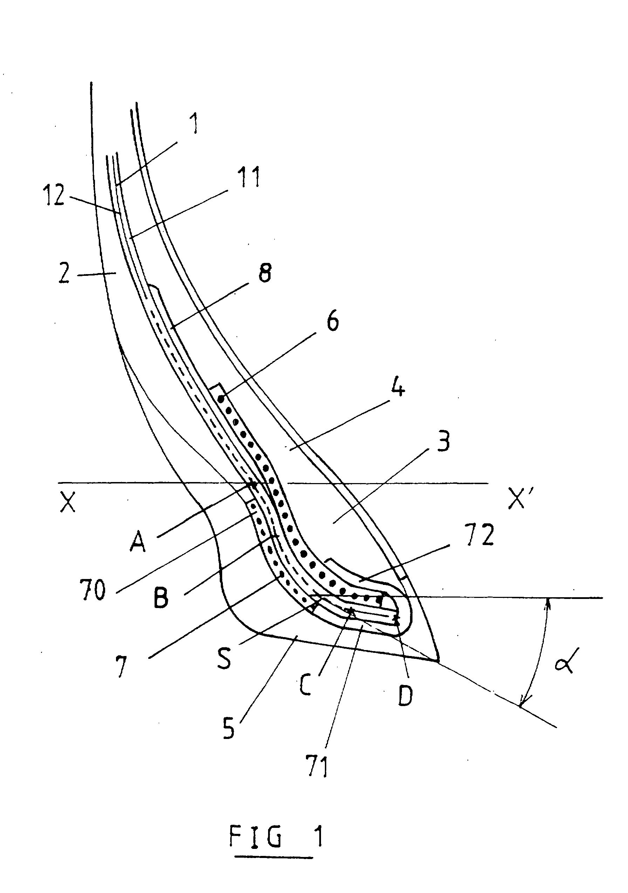

Le pneumatique de dimension 540/65 R 26, pour tracteur agraire (figure 1), a un rapport de forme H/S égal à 0,65. La bande de roulement dudit pneumatique (non montrée) est réunie aux bourrelets (3) par l'intermédiaire de deux flancs (2). Ledit pneumatique est renforcée par une armature de carcasse radiale (1) surmontée d'une armature de sommet (non montrée), et ladite armature de carcasse est composée de deux nappes radiales textiles de câbles en nylon 140x2 (11) et (12). Le profil méridien de la fibre géométriquement moyenne (traits en pointillé) de ladite armature, vue en section méridienne, ledit profil étant considéré radialement à l'intérieur d'une droite XX' parallèle à l'axe de rotation de la jante de montage et du pneumatique passant par le point du rebord de jante, correspondant au bourrelet considéré, le plus éloigné de l'axe de rotation, est constitué par un premier arc de cercle concave AB, tangent en A au profil méridien de l'armature de carcasse dans le flanc (2) et en B à un deuxième arc de cercle convexe BC, lui même prolongé tangentiellement et axialement vers l'intérieur par un segment de droite CD, D étant l'extrémité de l'armature de carcasse (1), située axialement à 0,4 fois la largeur de jante L du plan équatorial. Ledit pneumatique étant destiné à être monté sur une jante de dimension DW 15, dont la largeur normalisée est égale à 381 mm, et dont les points des rebords de jante les plus éloignés de l'axe de rotation sont sur un cercle de rayon égal à 356 mm, le point A est à une distance de l'axe de rotation égale à 345 mm. et distant axialement du plan équatorial (non montré) d'une quantité égale à 183 mm. Le point B, point de tangence avec le deuxième arc de cercle BC est aussi point de tangence avec une droite perpendiculaire à l'axe de rotation, l'arc de cercle AB ayant ainsi la longueur maximale. Ledit profil méridien est donc courbé en allant axialement et radialement de l'extérieur à l'intérieur pour former un bord SD axialement intérieur, localisé dans un angle α ouvert axialement et radialement vers l'intérieur, dont l'un des côtés, faisant avec l'axe de rotation un angle de 25°, est tangent au deuxième arc de cercle BC en S, et dont l'autre côté partant de S est parallèle audit axe de rotation.

L'armature de carcasse (1) dans le bourrelet (3) est renforcé axialement à l'intérieur et radialement à l'extérieur par une nappe additionnelle (6) de câbles inextensibles 68x23 en acier, de diamètre égal à 2,8 mm, et dont la force de rupture est au moins égale à 700 daN, et orientés à 0° par rapport à la direction circonférentielle. Ladite nappe (6) a une extrémité radialement supérieure au dessus de la droite XX' et une extrémité radialement inférieure proche de l'extrémité de l'armature de carcasse. Elle est séparée de l'armature de carcasse (2) par une couche caoutchouteuse de découplage (8) présentant la particularité d'être plus épaisse dans la partie pseudo-verticale de l'ensemble armature de carcasse-nappe additionnelle, alors qu'elle est seulement égale à la somme des deux épaisseurs de calandrage des câbles respectivement de nappe de carcasse et de nappe additionnelle dans la partie pseudo-horizontale. Ladite couche de caoutchouc a un module d'élasticité en tension (module sécant) au moins égal à 30 sous un allongement relatif de 10%.

Radialement à l'intérieur et axialement à l'extérieur est présente une deuxième nappe additionnelle (7) formée dans sa première partie (70) de câbles 68x23 continus en acier, lesdits câbles étant inextensibles et orientés par rapport à la direction circonférentielle d'un angle au plus égal à 2,5°. Ladite deuxième nappe additionnelle (7) est dans sa première partie (70) parallèle au profil méridien de l'armature de carcasse (1) dans le bourrelet (3) considéré. Alors que l'extrémité radialement supérieure de ladite deuxième nappe additionnelle (7) est légèrement située à l'intérieur de la droite XX' parallèle à l'axe de rotation passant par le point du crochet de jante le plus éloigné de l'axe de rotation, la première partie (70) de ladite nappe (7) a son extrémité radialement inférieure située sur la même perpendiculaire à l'axe de rotation que le point S du profil méridien de l'armature de carcasse (1). Ladite première partie (70) de la nappe additionnelle (7) est prolongée axialement par une deuxième partie (71) parallèle au profil méridien de l'armature de carcasse (1) et formée de câbles 9x28, orientés par rapport à la direction circonférentielle d'un angle de 90°. La deuxième partie (71) est retournée sur les extrémités de l'armature de carcasse (1) et de la première nappe additionnelle (6) pour former un retournement (72). L'ensemble des nappes est recouvert radialement à l'extérieur de la couche caoutchouteuse usuelle de protection (5) destinée à établir le contact avec la jante de montage. L'ensemble du bourrelet est complétée par un(des) bourrages de caoutchouc (4) axialement à l'intérieur et radialement à l'extérieur de la couche additionnelle (6).

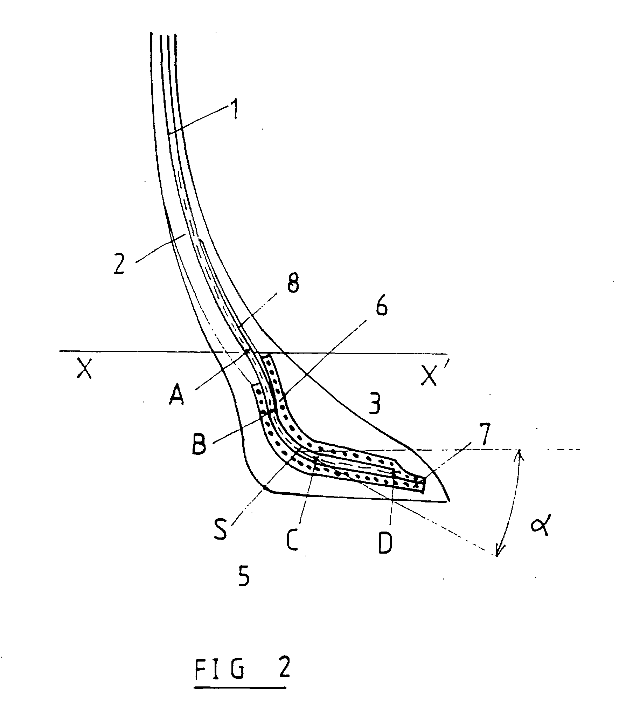

Le pneumatique de dimension 175/70 R 13 et représenté sur la figure 2, est un pneumatique pour véhicule de Tourisme. En prenant les mêmes références que celles de la figure 1 pour désigner les mêmes éléments, ledit pneumatique comprend une armature de carcasse (1) formée d'une seule nappe textile (1) en câbles de polyester. Comme précédemment, le profil méridien de la nappe de carcasse (1) dans le bourrelet (3) est composée de l'arc de cercle AB, tangent à l'arc BC, lui-même tangent et prolongé par le segment de droite CD. L'armature de carcasse est renforcée dans le bourrelet d'une part, radialement à l'extérieur et axialement à l'intérieur par une première nappe additionnelle (6) composée de câbles métalliques en acier 9x28 et orientés circonférentiellement et d'autre part, radialement à l'intérieur et axialement à l'extérieur par une deuxième nappe additionnelle (7) dont les deux parties sont constituées des mêmes câbles 9x28 et orientés aussi circonférentiellement. Si les extrémités radialement supérieures des deux nappes additionnelles (6), (7) respectivement satisfont les conditions énoncées précédemment, les extrémités radialement inférieures offrent la particularité d'être plus proches du plan équatorial que l'extrémité de la nappe de carcasse, les deux bords des nappes additionnelles devenant adjacents.

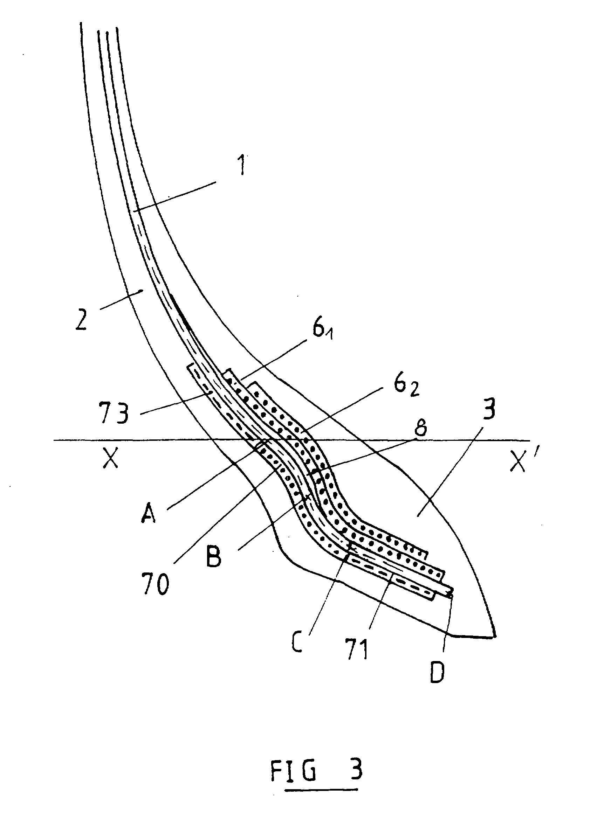

Le pneumatique "Poids-Lourds" de dimension 385/65 R 22.5 (figure 3), destiné à être monté sur une jante à base creuse possédant des sièges de jante inclinés à 15°, comprend, en prenant les mêmes références et comme les précédents, une bande de roulement réunie à deux bourrelets (3) par deux flancs (2). Une armature de carcasse, composée d'une seule nappe (1) de câbles métalliques en acier, renforce ledit pneumatique. Le profil méridien de la nappe de carcasse (1) est toujours formé des deux arcs de cercle AB et BC, l'arc BC étant prolongé d'un segment de droite CD faisant avec l'axe de rotation un angle de 20°. Le point A est distant du plan équatorial d'une quantité égale à 149 mm, soit 0,5 fois la largeur de jante 11.75 sur laquelle sera monté le pneumatique, alors que le point D est distant du même plan d'une quantité égale à 0,3 fois la même largeur de jante. L'arc de cercle AB, comme on peut le voir sur la figure 3, n'a pas, du fait de la forme particulière du profil méridien du rebord de la jante à sièges 15°, la longueur maximale possible, le point B n'étant pas point de tangence avec une droite perpendiculaire à l'axe de rotation. La couche additionnelle (6) radialement extérieure et axialement intérieure est composée de deux nappes (6₁) et (6₂) de câbles métalliques en acier 68x23 orientés circonférentiellement et dont la force de rupture est au moins égale à 700 daN. Les extrémités radialement inférieures des deux nappes sont plus éloignées du plan équatorial que l'extrémité de la nappe de carcasse et les extrémités radialement supérieures sont radialement à l'extérieur de la droite XX'. Quant à la deuxième couche additionnelle, elle est formée de trois parties :
- une troisième partie (73) s'étendant de son extrémité radialement supérieure jusqu'à une parallèle à l'axe de rotation passant par le point A et formée d'une nappe de câbles métalliques en acier ondulés dans le plan de ladite nappe et d'orientation moyenne circonférentielle et avec un rapport a/λ d'amplitude d'ondulation a sur la longueur d'onde λ pouvant être compris entre 0,03 et 0,1 ;
- d'une première partie (70), s'étendant du point A jusqu'à une perpendiculaire à l'axe de rotation abaissée du point C du profil méridien d'armature de carcasse, et formée d'une nappe de câbles métalliques 68x23 en acier, inextensibles, orientés circonférentiellement, et de diamètre égal à 2,8 mm et,
- axialement à l'intérieur à partir dudit point C d'une deuxième partie (71) formée d'une nappe de câbles métalliques en acier ondulés dans le plan de la couche et nappe de constitution identique à la nappe formant la troisième partie c'est-à-dire avec même rapport a/λ et avec les mêmes câbles, de plus petit diamètre que celui des câbles de la première partie (70) puisqu'égal à 1,4 mm.

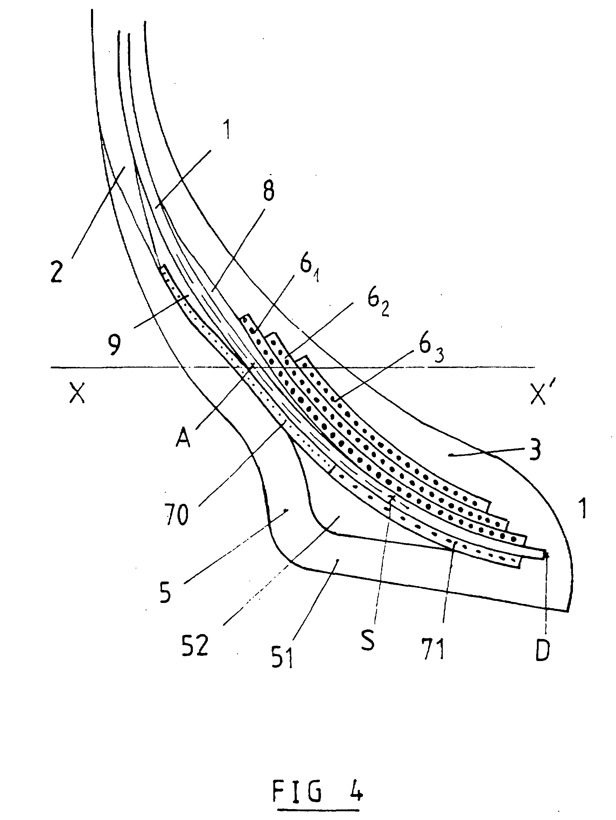

La figure 4 représente un pneumatique de dimension 26.5 R 25, destiné d'une part à être monté sur une jante de largeur normalisée égale à 495 mm et avec des sièges inclinés, par rapport à l'axe de rotation, d'un angle de 5°, et d'autre part à équiper un engin de chantier de Génie Civil. L'armature de carcasse dudit pneumatique est, comme dans l'exemple précédent, composée d'une seule nappe (1) de câbles métalliques en acier. Le profil méridien de la nappe de carcasse (1) offre la particularité de n'être formé que d'un seul arc de cercle AD, l'arc de cercle AB ayant dans ce cas une longueur nulle, et le segment de droite CD étant inexistant. L'arc de cercle AD est tangent en A au profil méridien de l'armature de carcasse (I) dans le flanc (2) ; son rayon de courbure est égal au rayon dudit profil d'armature de carcasse en A et constant sur toute la longueur AD. Le point A est distant du plan équatorial d'une quantité égale à 237 mm, soit 0,48 fois la largeur de jante sur laquelle sera monté le pneumatique étudié, et le point D est distant du même plan d'une quantité égale à 0,36 fois ladite largeur de jante. L'armature de carcasse (1), dans le bourrelet, est renforcée axialement à l'intérieur et radialement à l'extérieur par un ensemble (6) de trois nappes additionnelles (6₁, 6₂, 6₃) de câbles métalliques en acier inextensibles 68x23 FR, orientés circonférentiellement, dont le diamètre est égal à 2,8 mm et dont la force de rupture est supérieure à 700 daN. Lesdites trois nappes, de largeurs décroissantes en allant radialement vers l'extérieur, ont leurs extrémités radialement supérieures à l'extérieur de la droite XX' et leurs extrémités radialement inférieures légèrement plus éloignées du plan équatorial que l'extrémité d'armature de carcasse (1). Lesdites trois nappes sont radialement au dessus du point S (sommet de l'angle délimité d'une part par la tangente à l'arc de cercle BC faisant avec l'axe de rotation un angle de 25° et d'autre part par une parallèle audit axe) découplées de l'armature de carcasse par une couche de caoutchouc (8) dont l'épaisseur est égale à 2 mm et dont le module d'élasticité en tension sous un allongement relatif de 10% est égale à 40 MPa. Une deuxième couche additionnelle. composée de deux parties (70) et (71) complète la structure dans le bourrelet considéré. La première partie (70), axialement à l'extérieur, est formée d'au moins une nappe de câbles métalliques inextensibles en acier 27x23 NF, alors que la deuxième partie (71) est formée d'au moins une nappe de rangées de câbles métalliques inextensibles en acier discontinus circonférentiellement, les espaces entre tronçons de câbles étant décalées méridiennement et la nappe ainsi formée présentant une certaine extensibilité circonférentielle tout en étant très peu compressible dans le sens transversal. L'extrémité axialement intérieure de la deuxième partie (71) est située axialement à l'extérieur de l'extrémité radialement inférieure de l'armature de carcasse (1) et la largeur de ladite deuxième partie est préférentiellement comprise entre 0,7 et 0,9 fois la largeur du siège tronconique du bourrelet (3), alors que l'extrémité radialement supérieure de la première partie (70), qui prolonge ladite deuxième partie, est située radialement à l'extérieur de la droite XX', en présentant les particularités suivantes : la portion située radialement à l'intérieur de la droite XX' est adjacente à l'armature de carcasse (1), les câbles respectifs des deux nappes n'étant séparés entre eux que par les épaisseurs usuelles de calandrage des nappes, alors que la portion située radialement à l'extérieur de la droite XX' est fortement désolidarisée de l'armature de carcasse (1) par une couche (9) de mélange caoutchouteux d'épaisseur au moins égale à 2,5 mm et de même module d'élasticité sécant en tension que celui du mélange constituant la couche (8). Le profil méridien d'armature de carcasse et de l'ensemble formé par ladite armature et les couches additionnelles est tel que la couche caoutchouteuse de protection (5), assurant la jonction avec la jante de montage, est fortement épaissie au niveau de l'arrondi de bourrelet joignant le siège et la partie verticale dudit bourrelet. Il est alors avantageux, comme montré sur la figure 4, de diviser la couche (5) en deux parties : une première partie extérieure (51) d'épaisseur sensiblement constante et assurant la jonction avec la jante et une deuxième partie intérieure (52) sous forme triangulaire et ayant la particularité d'être constitué d'un mélange caoutchouteux de fort module d'élasticité de tension comparativement à celui du mélange constituant la partie (51) : par exemple le module sécant en tension à 10% d'allongement relatif de la partie (52) est au moins égal à 30 MPa, alors que ledit même module est égal à 6 MPa pour la partie (51).

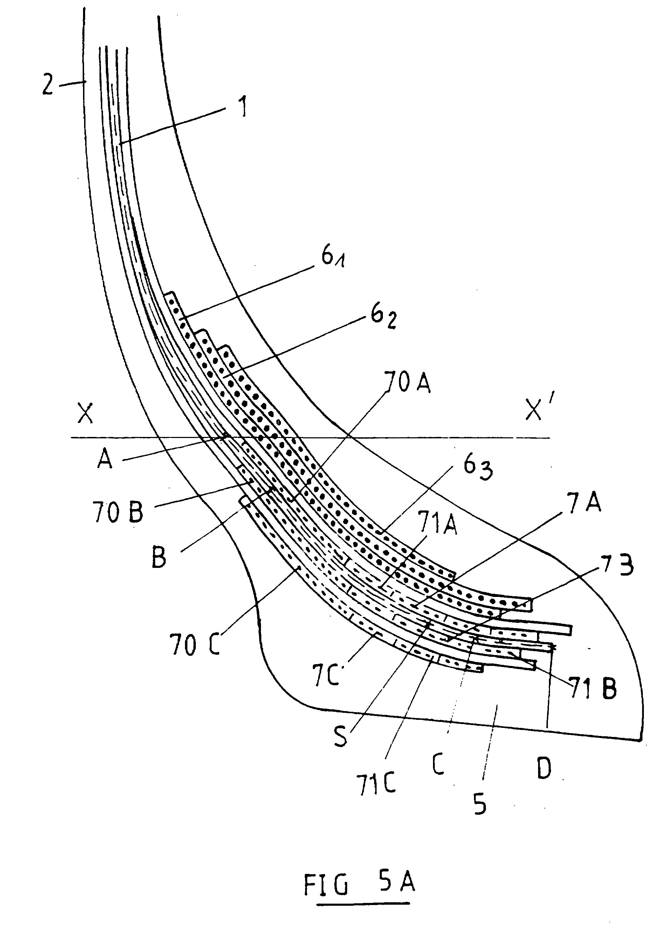

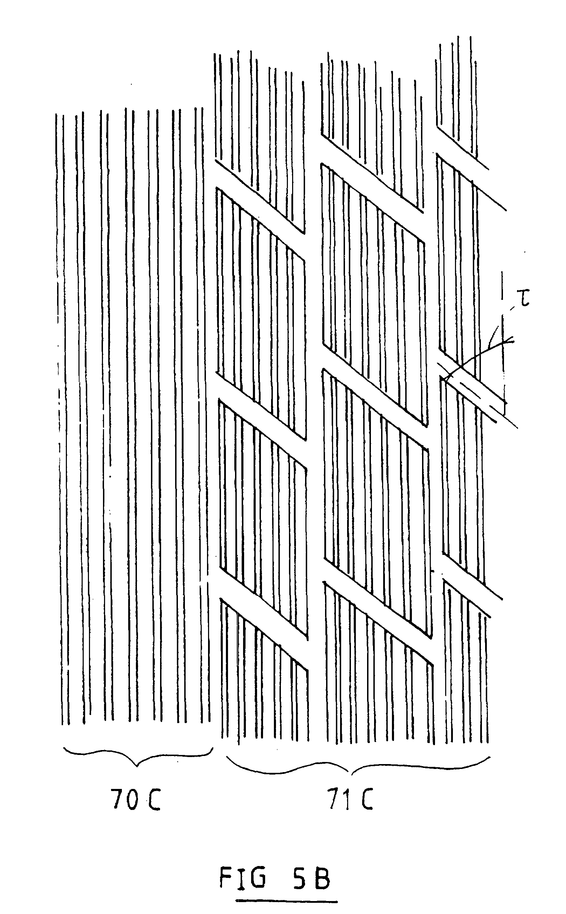

L'exemple décrit et montré sur les figures 5A et 5B concerne un pneumatique pour avion de dimension 40x14.19, destiné à être monté sur une jante 9,5x19 de largeur axiale égale à 241 mm et possédant des sièges inclinés à 5°. Le pneumatique considéré est un pneumatique à armature de carcasse radiale (1) comprenant plusieurs nappes de carcasse, au nombre de 6. Le profil de la fibre géométriquement moyenne de l'armature de carcasse (1) (tracé en pointillé) est toujours formé des arcs de cercle AB et BC, ce dernier étant prolongé axialement vers l'intérieur par un segment de droite CD et D étant l'extrémité de ladite armature de carcasse (1), située à une distance égale à 0,15 fois la largeur de jante du plan équatorial. La première couche additionnelle (6) est composée de trois nappes (6₁, 6₂, 6₃) de câbles métalliques en acier inextensibles 68x23 FR de diamètre égal à 2,8 mm et de force de rupture au moins égale à 700 daN. La deuxième couche additionnelle (7) est formée d'une part de deux nappes (7A, 7B), chaque nappe additionnelle (7A, 7B) étant insérée entre deux groupes de deux nappes d'armature de carcasse et, d'autre part, d'une troisième nappe additionnelle (7C) radialement à l'intérieur et axialement à l'extérieur du groupe de deux nappes de carcasse radialement le plus à l'intérieur et axialement le plus à l'extérieur. Chacune des trois nappes (7A, 7B, 7C) est formée d'une première partie (70A, 70B, 70C), composée de câbles 68x23 FR métalliques en acier, inextensibles et circonférentiels, et d'une deuxième partie (71A, 71B, 71C) composée de bandes de dix câbles métalliques en acier 27x23 NF, lesdites bandes étant circonférentiellement discontinus et les lignes de discontinuité faisant, avec la direction circonférentielle, un angle τ, en aucun cas égal à l'angle fait par les câbles de l'armature de carcasse radiale, et en différant préférentiellement d'au moins 10°. Les bandes sont disposée axialement en nombre voulu pour obtenir la largeur axiale désirée de chacune des nappes de la deuxième partie (figure 5B), et peuvent être disposées bout à bout, ou avec un certain recouvrement.

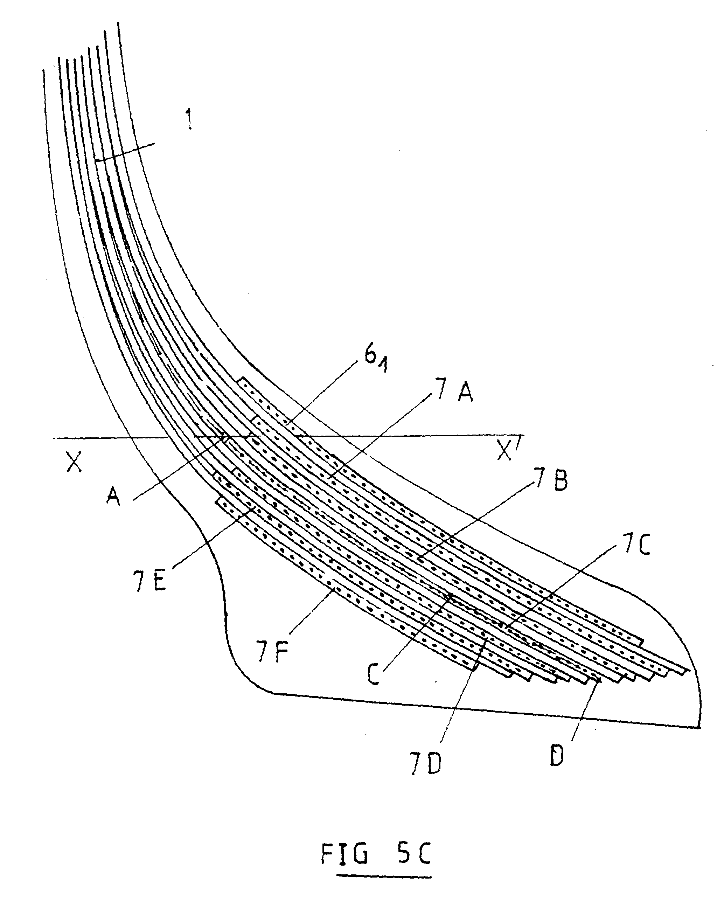

Le deuxième exemple décrit et montré sur la figure 5C concerne aussi un pneumatique pour Avion de la même dimension que précédemment. Le pneumatique considéré est alors un pneumatique à carcasse croisée (1), comprenant plusieurs nappes de carcasse, en nombre pair de douze, de câbles de nylon croisés d'une nappe à la suivante. Le nombre important de nappes de carcasse conduit, contrairement au cas décrit auparavant, à un profil de la fibre géométriquement moyenne de l'armature de carcasse (1) (tracé en pointillé) dépourvu de l'arc de cercle AB, le point B étant confondu avec le point A, l'arc de cercle BC étant prolongé axialement vers l'intérieur par un segment de droite CD et D étant l'extrémité de ladite fibre moyenne de l'armature de carcasse (1). La première couche additionnelle (6), radialement à l'extérieur et axialement à l'intérieur, est composée d'une seule nappe (6₁) de câbles métalliques acier 68x23 FR inextensibles et circonférentiels, alors que la deuxième couche additionnelle (7), radialement à l'intérieur et axialement à l'extérieur du groupe de deux nappes de carcasse radialement le plus l'extérieur et axialement le plus à l'intérieur, est formée, d'une part de cinq nappes (7A à 7E), chaque nappe (7A, 7B, ....., 7E) étant enserrée entre deux groupes de deux nappes de carcasse, et d'autre part d'une sixième nappe (7F) axialement à l'extérieur et radialement à l'intérieur du groupe de deux nappes de carcasse radialement le plus à l'intérieur et axialement le plus à l'extérieur. Lesdites nappes (7) sont toutes formées de câbles métalliques acier 68x23 inextensibles et circonférentiels.

## Revendications

1. Pneumatique destiné à être monté sur une jante normalisée de largeur axiale L, avec des rebords de jante avec crochets arrondis, comprenant une bande de roulement réunie à deux bourrelets (3) par deux flancs (2) et au moins une armature de carcasse (1) formée d'au moins une nappe d'éléments de renforcement, **caractérisé en ce que** chaque bourrelet (3) est dépourvu de tringle, ladite armature de carcasse (1) ayant dans chaque bourrelet (3) un profil méridien courbé et formé en allant axialement et radialement de l'extérieur à l'intérieur, d'au moins un arc de cercle BC convexe éventuellement prolongé tangentiellement par un segment de droite CD, pour constituer un bord d'armature de carcasse (1) dans le bourrelet (3), localisé dans un angle α aigu ouvert axialement et radialement vers l'intérieur dont l'un des côtés est parallèle à l'axe de rotation et de valeur au plus égale à 25°, ladite armature de carcasse (1) étant dans chaque bourrelet (3) au moins radialement à l'extérieur et axialement à l'intérieur renforcée par au moins une première couche additionnelle (6) continue, de profil méridien sensiblement parallèle au profil méridien de ladite armature de carcasse (1) dans le bourrelet (3) et comportant au moins une première partie composée d'au moins une nappe (6₁, 6₂, 6₃) formée d'éléments de renforcement inextensibles faisant avec la direction circonférentielle un angle compris entre -2,5° et +2,5°, l'extrémité radialement supérieure de ladite nappe additionnelle étant distante de l'axe de rotation d'une quantité au moins égale à 0,96 fois la distance séparant dudit axe le point du rebord correspondant de la jante de montage le plus éloigné dudit axe de rotation, et l'extrémité axialement intérieure étant distante du plan équatorial d'une quantité au plus égale à 0,43 fois la largeur L de la jante de montage.

2. Pneumatique selon la revendication 1, **caractérisé en ce que** le profil méridien d'armature de carcasse (1) comprend en outre, radialement et axialement à l'extérieur, un premier arc de cercle AB concave, ledit arc de cercle étant prolongé par l'arc de cercle BC convexe, et ayant une valeur au maximum égale à la longueur d'un arc de cercle dont l'extrémité radialement inférieure B serait le point de tangence dudit arc avec une perpendiculaire à l'axe de rotation.

3. Pneumatique selon la revendication 2, **caractérisé en ce que** l'extrémité radialement extérieure A du premier arc de cercle concave AB est le point de tangence dudit arc AB avec le profil méridien convexe de l'armature de carcasse (1) dans le flanc (2), et radialement distante de l'axe de rotation d'une quantité égale au rayon du cercle, lieu géométrique des points du rebord de jante les plus éloignés dudit axe, le centre de courbure dudit arc AB ayant, par rapport aux deux axes que sont la trace du plan équatorial et l'axe de rotation, les mêmes coordonnées que le centre de courbure du crochet de jante.

4. Pneumatique selon la revendication 2, **caractérisé en ce que** le deuxième arc de cercle BC, tangent en B au premier arc de cercle AB, a un rayon de courbure compris entre une valeur minimale de 5 mm et une valeur maximale égale au rayon de courbure du profil méridien d'armature de carcasse (1) dans le flanc (2) mesuré au point de tangence A entre ledit profil et le premier arc de cercle AB, ladite valeur maximale étant la valeur de rayon utilisée lorsque le premier arc de cercle AB a une longueur nulle.

5. Pneumatique selon l'une des revendications 1 à 4, **caractérisé en ce que** le bord axialement intérieur du profil méridien d'armature de carcasse, composé d'une partie du deuxième arc de cercle BC à laquelle s'ajoute le segment de droite CD, est la partie de profil méridien localisée dans un angle α défini par une demi-droite tangente en S au deuxième arc de cercle BC et faisant avec l'axe de rotation un angle de 25° et une demi-droite parallèle audit axe de rotation dont l'origine S est précisément le point de tangence du deuxième arc de cercle BC avec la demi-droite orientée à 25°.

6. Pneumatique selon l'une des revendications 1 à 5, **caractérisé en ce que** la première couche additionnelle (6) est composée de deux parties, la deuxième partie de ladite couche (6) étant située radialement à l'extérieur de la droite parallèle à l'axe de rotation et à une distance dudit axe égale à 0,96 fois la distance séparant dudit axe le point du rebord correspondant de la jante de montage le plus éloigné dudit axe de rotation.

7. Pneumatique selon la revendication 6, **caractérisé en ce que** les deux parties des nappes de la couche additionnelle (6), superposées les unes aux autres, et dont les longueurs pourront être égales ou non, sont formées d'éléments de renforcements métalliques inextensibles et circonférentiels.

8. Pneumatique selon la revendication 6, **caractérisé en ce que** la deuxième partie de ladite couche (6) est formée d'éléments circonférentiels, tels que ladite partie soit extensible dans le sens circonférentiel, lesdits éléments étant par eux-mêmes extensibles, ou inextensibles mais arrangés dans ladite partie de manière à ce que cette dernière soit extensible.

9. Pneumatique selon les revendications 1 à 8, **caractérisé en ce que** la première couche additionnelle est, entre son extrémité axialement intérieure et le sommet S de l'angle α dans lequel est localisé le bord de l'armature de carcasse (1), séparée de ladite armature par une épaisseur minimale de mélange caoutchouteux, épaisseur qui est la somme des épaisseurs des couches de calandrage en regard respectivement des deux nappes adjacentes (1) et (6₁), alors qu'entre ledit sommet S et l'extrémité radialement supérieure, l'épaisseur de découplage est comprise entre 1,00 et 1,80 fois l'épaisseur minimale précédente.

10. Pneumatique selon l'une des revendications 1 à 9, **caractérisé en ce que** l'armature de carcasse (1) est renforcée, axialement à l'extérieur et radialement à l'intérieur d'au moins la nappe radialement la plus intérieure et axialement la plus extérieure de l'armature de carcasse (1), par une deuxième couche additionnelle continue (7), formée d'au moins une première partie (70) d'au moins une nappe d'éléments de renforcement, ayant un profil méridien sensiblement parallèle au profil méridien de ladite armature de carcasse (1) dans le bourrelet (3), et composée d'éléments de renforcement inextensibles et circonférentiels.

11. Pneumatique selon la revendication 10, **caractérisé en ce que** l'extrémité radialement supérieure de la couche additionnelle (7) est radialement à l'intérieur de la droite XX' parallèle à l'axe de rotation de la jante et passant par le point du crochet de jante, correspondant au bourrelet considéré, le plus éloigné dudit axe de rotation.

12. Pneumatique selon la revendication 11, **caractérisé en ce que** la deuxième couche additionnelle (7) est de composition homogène et formée, dans son intégralité, de câbles inextensibles, de préférence métalliques, faisant avec la direction circonférentielle un angle compris entre -2,5° et +2,5°.

13. Pneumatique selon la revendication 11, **caractérisé en ce que** la deuxième couche additionnelle (7) est composée de deux parties, une première partie (70) comprise entre son extrémité radialement supérieure et un point situé approximativement entre le milieu de l'arc de cercle BC et le sommet S de l'angle α dans lequel est située le bord d'armature de carcasse (1), et une deuxième partie (71) comprise entre ledit point et son extrémité axialement intérieure, la première partie (70) étant formée d'au moins une nappe d'éléments de renforcement inextensibles et circonférentiels, alors que la deuxième partie (71) est formée d'au moins une nappe d'éléments de renforcement tels que ladite nappe présente les propriétés d'être peu compressible dans le sens transversal et extensible dans le sens circonférentiel.

14. Pneumatique selon la revendication 10, **caractérisé en ce que** l'extrémité radialement supérieure de la couche additionnelle (7) est radialement à l'extérieur de la droite XX' parallèle à l'axe de rotation de la jante et passant par le point du crochet de jante, correspondant au bourrelet considéré, le plus éloigné dudit axe de rotation.

15. Pneumatique selon la revendication 14, **caractérisé en ce que** la deuxième couche additionnelle (7) est composée de trois parties, une première partie (70) comprise entre son extrémité radialement supérieure et un point situé approximativement entre le milieu de l'are de cercle BC et le sommet S de l'angle α dans lequel est située le bord d'armature de carcasse (1), une deuxième partie (71) comprise entre ledit point et son extrémité axialement intérieure, et un troisième partie (73) sensiblement située radialement au dessus de la droite parallèle à l'axe de rotation et passant par le point du rebord de jante correspondant le plus éloigné dudit axe de rotation, et prolongeant radialement à l'extérieur la première partie (70), la deuxième partie (71) et la troisième partie étant chacune formée d'au moins une nappe d'éléments de renforcement tels que la nappe présente les propriétés d'être peu compressible dans le sens transversal et extensible dans le sens circonférentiel.

16. Pneumatique selon l'une des revendications 8, 13 ou 15, **caractérisé en ce que** les éléments de renforcement composant la deuxième partie de la première couche additionnelle (6) et de la deuxième partie (71) de la deuxième couche additionnelle (7), sont des éléments de renforcement élastiques, continus, rectilignes et orientés circonférentiellement, lesdits éléments étant parallèles entre eux et pratiquement jointifs dans le sens transversal.

17. Pneumatique selon l'une des revendications 8, 13 ou 15, **caractérisé en ce que** les éléments de renforcement composant la deuxième partie de la première couche additionnelle (6), et la deuxième partie (71) de la deuxième couche additionnelle (7) sont des éléments de renforcement ondulés ou en zigzag dans le plan de nappe(s), d'orientation moyenne circonférentielle, avec un rapport d'amplitude d'ondulation a sur la longueur d'onde pouvant être compris entre 0,03 et 0,1, lesdits éléments étant parallèles entre eux et pratiquement jointifs dans le sens transversal.

18. Pneumatique selon l'une des revendications 8, 13 ou 15, **caractérisé en ce que** la(les) nappe(s) composant la deuxième partie de la première couche additionnelle (6), et la deuxième partie (71) de la deuxième couche additionnelle (7) sont formées de rangées d'éléments de renforcement discontinus, chaque élément ayant une longueur circonférentielle pouvant être comprise entre 0,1 fois et 1 fois la longueur circonférentielle de la nappe qu'ils composent, et les espaces entre éléments étant décalés méridiennement par rapport aux espaces des rangées axialement adjacentes, lesdites rangées d'éléments étant parallèles entre elles et pratiquement jointives dans le sens transversal.

19. Pneumatique selon la revendication 13 ou 15, **caractérisé en ce que** les éléments de renforcement composant la deuxième partie (71) de la deuxième couche additionnelle (7) sont des éléments de renforcement métalliques orientés par rapport à la direction circonférentielle d'un angle au moins égal à 80°, lesdits éléments étant circonférentiellement séparés entre eux par une distance au moins égale à 0,2 mm.

20. Pneumatique selon la revendication 13 ou 15, **caractérisé en ce que** la(les) nappe(s) de la deuxième partie (71) de la deuxième couche additionnelle (7) sont formées de bandes de quelques éléments de renforcement circonférentiels, lesdites bandes étant circonférentiellement discontinus et les espaces de discontinuité entre bandes faisant avec la direction circonférentielle un angle différent de l'angle fait avec la même direction par les éléments de renforcement d'armature de carcasse, la différence étant au moins égale à 10°.

21. Pneumatique selon la revendication 10, **caractérisé en ce que** l'armature de carcasse(1) est formée d'au plus trois nappes, la deuxième couche additionnelle (7) étant en totalité située axialement à l'extérieur et radialement à l'intérieur de la nappe de carcasse radialement la plus à l'intérieur et axialement la plus à l'extérieur de l'armature de carcasse (1).

22. Pneumatique selon la revendication 10, **caractérisé en ce que** l'armature de carcasse (1) est formée d'au moins quatre nappes, les nappes qui forment la deuxième couche additionnelle (7) sont telles que deux d'entre elles enserrent un groupe de nappes de carcasse pouvant être formé de une ou plusieurs nappes d'armature de carcasse.

23. Pneumatique selon l'une des revendications 1 à 22, **caractérisé en ce que** l'armature de carcasse (1) est composée de nappes d'éléments de renforcement faisant avec la direction circonférentielle un angle au moins égal à 85°.

24. Pneumatique selon la revendication 1, **caractérisé en ce que** la couche caoutchouteuse de protection (5) assurant la jonction avec la jante de montage est, au niveau de l'arrondi du bourrelet, divisée en deux parties : une première partie (51) d'épaisseur sensiblement constante, une deuxième partie (52) sous forme triangulaire et constituée d'un mélange caoutchouteux dont le module sécant d'élasticité en tension sous 10 % d'allongement relatif est au moins égal à 30 Mpa et très supérieur au module de même nom du mélange formant la première partie.

## Patentansprüche

1. Reifen, der dazu bestimmt ist, auf einer Normfelge mit axialer Breite L und mit abgerundeten, umgebogenen Felgenrändern montiert zu werden, und der eine Lauffläche aufweist, die mit zwei Wülsten (3) durch zwei Flanken (2) und mindestens eine Karkassenbewehrung (1) vereint ist, die aus mindestens einer Lage von Verstärkungselementen gebildet ist, dadurch, im Meridianschnitt gesehen, gekennzeichnet, daß jeder Wulst (3) ohne Wulstkern ist, daß die genannte Karkassenbewehrung (1) in jedem Wulst (3) ein Meridianprofil hat, das gekrümmt und dadurch gebildet ist, daß man radial von außen nach innen in mindestens einem konvexen Kreisbogen BC geht, der möglichenfalls tangential durch das Segment CD einer Geraden verlängert ist, um im Wulst (3) einen Rand der Karkassenbewehrung (1) zu bilden, der in einem spitzen Winkel α angeordnet ist, der axial und radial nach innen offen ist, wovon eine der Seiten parallel zur Drehachse ist, und mit einem Wert, der höchstens 25° beträgt, daß die genannte Karkassenbewehrung (1) in jedem Wulst (3) mindestens radial außen und axial innen durch eine erste, zusätzliche, durchgehende Schicht (6) mit einem Meridianprofil verstärkt ist, das etwa parallel zum Meridianprofil der genannten Karkassenbewehrung (1) im Wulst (3) ist, und mindestens einen ersten Teil aufweist, der aus mindestens einer Lage (6₁, 6₂, 6₃) zusammengesetzt ist, die aus undehnbaren Verstärkungselementen gebildet ist, die zur Umfangsrichtung einen Winkel bilden, der zwischen -2,5° und +2,5° liegt, daß das radial obere Ende des genannten ersten Teils der zusätzlichen Lage von der Drehachse um ein Maß beabstandet ist, das mindestens gleich ist dem 0,96-fachen des Abstandes, der den Punkt des entsprechenden Randes der Montagefelge von der genannten Achse trennt, der von der genannten Drehachse am weitesten entfernt ist, und daß das axial innere Ende von der Äquatorialebene um ein Maß entfernt ist, das höchstens gleich ist dem 0,43-fachen der Breite L der Montagefelge.

2. Reifen nach Anspruch 1, **dadurch gekennzeichnet, daß** das Meridianprofil der Karkassenbewehrung (1) außerdem radial und axial aussen einen ersten, konkaven Kreisbogen AB aufweist, wobei der genannte Kreisbogen durch den konvexen Kreisbogen BC verlängert ist, der höchstens einen Wert hat, der der Länge eines Kreisbogens gleich ist, dessen radial unteres Ende B der Tangentenpunkt des genannten Bogens mit einer Senkrechten zur Drehachse sein soll.

3. Reifen nach Anspruch 2, **dadurch gekennzeichnet, daß** das radial äußere Ende A des ersten, konkaven Kreisbogens AB der Tangentenpunkt des genannten Bogens AB mit dem konvexen Meridianprofil der Karkassenbewehrung (1) in der Flanke (2) ist, und radial zur Drehachse um eine Größe beabstandet ist, die gleich ist dem Radius des Kreises, der geometrischer Ort der Punkte des Felgenrandes ist, die von der genannten Achse am weitesten entfernt sind, wobei die Mitte der Krümmung des genannten Bogens AB im Bezug auf die beiden Achsen, die die Spur der Äquatorialebene und der Drehachse sind, dieselben Koordinaten hat wie die Krümmungsmitte des Felgenhakens.

4. Reifen nach Anspruch 2, **dadurch gekennzeichnet, daß** der zweite Kreisbogen BC, Tangente in B für den ersten Kreisbogen AB, einen Krümmungsradius hat, der zwischen einem Mindestwert von 5 mm und einem Höchstwert liegt, der gleich dem Krümmungsradius des Meridianprofils der Karkassenbewehrung (1) in der Flanke (2) ist, gemessen am Tangentenpunkt A zwischen dem genannten Profil und dem ersten Kreisbogen AB, wobei der genannte Höchstwert der Wert des Radius ist, der verwendet wird, wenn der erste Kreisbogen AB eine Länge Null hat.

5. Reifen nach einem der Ansprüche 1 bis 4, **dadurch gekennzeichnet, daß** der axial innere Rand des Meridianprofils der Karkassenbewehrung, zusammengesetzt aus einem Teil des zweiten Kreisbogens BC, an der das Geradensegment CD anschließt, ein Teil des Meridianprofils ist, das in einem Winkel α angeordnet ist, der durch eine Halbgerade gebildet ist, die eine Tangente in S an den zweiten Kreisbogen BC ist und mit der Drehachse einen Winkel von 25° bildet, sowie eine Halbgerade, die zur genannten Drehachse parallel ist, wobei der Ursprung S hiervon genau der Tangentenpunkt des zweiten Kreisbogens BC mit der unter 25° orientierten Halbgeraden ist.

6. Reifen nach einem der Ansprüche 1 bis 5, **dadurch gekennzeichnet, daß** die erste, zusätzliche Schicht (6) aus zwei Teilen zusammengesetzt ist, wobei der erste Teil der genannten Schicht (6) radial auf der Außenseite der Geraden parallel zur Drehachse und in einem Abstand von der genannten Achse gelegen ist, der dem 0,96-fachen des Abstands gleich ist, der den Punkt des entsprechenden Rands der Montagefelge, der von der genannten Drehachse am weitesten entfernt ist, von der genannten Achse trennt.

7. Reifen nach Anspruch 6, **dadurch gekennzeichnet, daß** die beiden Teile der Lagen der zusätzlichen Schicht (6), die übereinanderliegen und deren Längen gleich sein können oder nicht, aus undehnbaren und in Umfangsrichtung verlaufenden, metallischen Verstärkungselementen gebildet sind.

8. Reifen nach Anspruch 6, **dadurch gekennzeichnet, daß** der zweite Teil der genannten Schicht (6) aus solchen Umfangselementen gebildet ist, daß der genannte Teil in Umfangsrichtung dehnbar sein soll, die genannten Elemente ihrerseits dehnbar sein sollen oder undehnbar, aber im genannten Teil derart angeordnet, daß dieser letztgenannte dehnbar sein soll.

9. Reifen nach den Ansprüchen 1 bis 8, **dadurch gekennzeichnet, daß** die erste, zusätzliche Schicht zwischen ihrem axial inneren Ende und dem Scheitel S des Winkels α, worin der Rand der Karkassenbewehrung (1) angeordnet ist, von der genannten Bewehrung durch eine minimale Dicke aus gummihaltiger Mischung getrennt ist, eine Dicke, die die Summe der Dicken der Kalandrierschichten hinsichtlich jeweils der beiden benachbarten Lagen (1) und (6₁) ist, während zwischen dem genannten Scheitel S und dem radial oberen Ende die Entkoppelungsdicke zwischen dem 1,00-fachen und dem 1,80-fachen der vorhergehenden, minimalen Dicke beträgt.

10. Reifen nach einem der Ansprüche 1 bis 9, **dadurch gekennzeichnet, daß** die Karkassenbewehrung (1) axial außerhalb und radial innerhalb von mindestens der Lage radial am weitesten innerhalb und axial am weitesten außerhalb von der Karkassenbewehrung (1) durch eine zweite, zusätzliche, durchgehende Schicht (7) verstärkt ist, die aus mindestens einem ersten Teil (70) mindestens einer Lage von Verstärkungselementen gebildet ist, mit einem Meridianprofil, das etwa parallel zum Meridianprofil der genannten Karkassenbewehrung (1) im Wulst (3) verläuft, und aus undehnbaren und in Umfangsrichtung verlaufenden Elementen zusammengesetzt ist.

11. Reifen nach Anspruch 10, **dadurch gekennzeichnet, daß** das radial obere Ende der zusätzlichen Schicht (7) radial innerhalb der Geraden XX' liegt, die parallel zur Drehachse der Felge verläuft und durch den von der genannten Drehachse am weitesten entfernten Hakenpunkt der Felge hindurchläuft, der dem in Betracht gezogenen Wulst entspricht,

12. Reifen nach Anspruch 11, **dadurch gekennzeichnet, daß** die zweite, zusätzliche Schicht (7) eine homogene Zusammensetzung hat und in ihrer Gesamtheit aus undehnbarenSeilen, bevorzugt Metallseilen, gebildet ist, die mit der Umfangsrichtung einen Winkel bilden, der zwischen -2,5° und +2,5° liegt.

13. Reifen nach Anspruch 11, **dadurch gekennzeichnet, daß** die zweite, zusätzliche Schicht (7) aus zwei Teilen zusammengesetzt ist, einem ersten Teil (70), der zwischen ihrem radial oberen Ende und einem Punkt liegt, der näherungsweise zwischen der Mitte des Kreisbogens BC und dem Scheitel S des Winkels α gelegen ist, in dem der Rand der Karkassenbewehrung (1) gelegen ist, und einem zweiten Teil (71), der zwischen dem genannten Punkt und ihrem axial inneren Ende gelegen ist, wobei der erste Teil (70) aus mindestens einer Lage aus undehnbaren und sich in Umfangsrichtung erstreckenden Verstärkungselementen gebildet ist, während der zweite Teil (71) aus mindestens einer Lage von Verstärkungselementen so gebildet ist, daß die genannte Lage die Eigenschaften hat, in Querrichtung wenig kompressibel zu sein und in Umfangsrichtung dehnbar zu sein.

14. Reifen nach Anspruch 10, **dadurch gekennzeichnet, daß** das radial obere Ende der zusätzlichen Schicht (7) radial auf der Außenseite der Geraden XX' liegt, die parallel zur Drehachse der Felge verläuft und durch den am von der Drehachse weitesten entfernten Punkt des Felgenhakens hindurchläuft, der dem betrachteten Wulst entspricht.

15. Reifen nach Anspruch 14, **dadurch gekennzeichnet, daß** die zweite, zusätzliche Schicht (7) aus drei Teilen zusammengesetzt ist, einem ersten Teil (70), der zwischen ihrem radial oberen Ende und einem Punkt liegt, der näherungsweise zwischen der Mitte des Kreisbogens BC und dem Scheitels des Winkels α gelegen ist, in dem der Rand der Karkassenbewehrung (1) liegt, einem zweiten Teil (71), der zwischen dem genannten Punkt und ihrem axial inneren Ende liegt, und einem dritten Teil (73), der etwa radial über der Geraden gelegen ist, die parallel zur Drehachse verläuft und durch den Punkt des entsprechenden Felgenrandes hindurchläuft, der von der genannten Drehachse am weitesten entfernt ist, und radial auf der Außenseite den ersten Teil (70) verlängert, wobei der zweite Teil (71) und der dritte Teil jeweils aus mindestens eine Lage aus Verstärkungselementen so gebildet ist, daß sie in Querrichtung wenig kompressibel und in Umfangsrichtung dehnbar sind.

16. Reifen nach einem der Ansprüche 8, 13 oder 15, **dadurch gekennzeichnet, daß** die Verstärkungselemente, die den zweiten Teil der ersten zusätzlichen Schicht (6) und den zweiten Teil (71) der zweiten, zusätzlichen Lage (7) zusammensetzen, elastische, durchgehende, geradlinige und in Unfangsrichtung orientierte Verstärkungselemente sind, wobei die genannten Elemente parallel zueinander sind und praktisch in Querrichtung aneinanderstoßen.

17. Reifen nach einem der Ansprüche 8, 13 oder 15, **dadurch gekennzeichnet, daß** die Verstärkungselemente, die den dritten Teil der ersten, zusätzlichen Schicht (6) und den zweiten Teil (71) der zweiten, zusätzlichen Schicht (7) zusammensetzen, in der Ebene der Lage(n) gewellte oder zickzackförmige Elemente sind, mit einer mittleren Orientierung in Umfangsrichtung und einem Verhältnis der Amplitude der Wellung zur Wellenlänge zwischen 0,03 und 0,1, wobei die genannten Elemente zueinander parallel sind und in Querrichtung praktisch aneinander anstoßen.

18. Reifen nach einem der Ansprüche 8, 13 oder 15, **dadurch gekennzeichnet, daß** die Lage(n), die den zweiten Teil der ersten, zusätzlichen Schicht (6) und den zweiten Teil (71) der zweiten, zusätzlichen Schicht (7) zusammensetzt bzw. zusammensetzen, aus Reihen von nicht-durchgehenden. Verstärkungselementen gebildet sind, wobei jedes Element eine Umfangslänge hat, die zwischen dem 0,1-fachen und dem 1-fachen der Umfangslänge der Lage liegt, die sie zusammensetzen, und die Räume zwischen den Elementen in Meridianrichtung in Bezug auf die Räume der axial benachbarten Reihen versetzt sind, und die Reihen von Elementen untereinander parallel sind und in Querrichtung praktisch aneinanderstoßen.

19. Reifen nach dem Anspruch 13 oder 15, **dadurch gekennzeichnet, daß** die Verstärkungselemente, die den zweiten Teil (71) der zweiten, zusätzlichen Schicht (7) zusammensetzen, metallische Verstärkungselemente sind, die in Bezug auf die Umfangsrichtung in einem Winkel orientiert sind, der mindestens 80° beträgt, wobei die genannten Elemente in Umfangsrichtung voneinander durch einen Abstand getrennt sind, der mindestens 0,2 mm beträgt.

20. Reifen nach Anspruch 13 oder 15, **dadurch gekennzeichnet, daß** die Lage(n) des zweiten Teils (71) der zweiten, zusätzlichen Schicht (7) aus Bändern aus einigen Umfangs-Verstärkungselementen gebildet sind, daß die Bänder in Umfangsrichtung diskontinuierlich sind und mit den die Diskontinuität bildenden Zwischenräumen zwischen den Bändern zur Umfangsrichtung einen Winkel bilden, der sich vom Winkel unterscheidet, der mit derselben Richtung durch die Verstärkungselemente der Karkassenbewehrung gebildet ist, und daß der Unterschied mindestens 10° beträgt.

21. Reifen nach Anspruch 10, **dadurch gekennzeichnet, daß** die Karkassenbewehrung (1) aus höchstens drei Lagen gebildet ist, wobei die zweite, zusätzliche Schicht (71) in ihrer Gesamtheit axial auf der Aussenseite und radial auf der Innenseite der Karkassenlage liegt, die die radial am weitesten innenliegende und axial am weitesten außenliegende der Karkassenbewehrung (1) ist.

22. Reifen nach Anspruch 10, **dadurch gekennzeichnet, daß** die Karkassenbewehrung (1) aus mindestens viel Lagen gebildet ist, und daß die Lagen, die die zweite, zusätzliche Lage (7) bilden, so beschaffen sind, daß zwei von ihnen eine Gruppe von Karkassenlagen einschliessen, die aus einer oder mehreren Lagen der Karkasenbewehrung gebildet sein können.

23. Reifen nach einem der Ansprüche 1 bis 22, **dadurch gekennzeichnet, daß** die Karkassenbewehrung (1) aus Lagen von Verstärkungselementen zusammengesetzt ist, die zur Umfangsrichtung einen Winkel bilden, der mindestens 85° beträgt.

24. Reifen nach Anspruch 1, **dadurch gekennzeichnet, daß** die gummihaltige Schutzschicht (5) , die die Verbindung mit der Montagefelge sicherstellt, auf Höhe der Rundung des Wulstes in zwei Teile unterteilt ist: einen ersten Teil (51) mit einer im wesentlichen konstanten Dicke, und einen zweiten Teil (52) in dreieckiger Form, der aus einer Gummimischung gebildet ist, deren Sekantenmodul der Elastizität bei Zug unter 10% relativer Dehnung mindestens 30 MPa beträgt und weit über dem gleichnamigen Modul der Mischung liegt, die den ersten Teil bildet.

## Claims

1. A tyre which is intended to be mounted on a standardised rim of axial width L, with rim flanges with rounded hooks, comprising a tread joined to two beads (3) by two sidewalls (2) and at least one carcass reinforcement (1) formed of at least one ply of reinforcement elements, **characterised in that** each bead (3) is devoid of bead wire, said carcass reinforcement (1) having in each bead (3) a curved meridian profile which is formed axially and radially from the outside to the inside of at least one convex arc of a circle BC, possibly extended tangentially by a straight-line segment CD, to form an edge of the carcass reinforcement (1) in the bead (3), located in an acute angle a open axially and radially towards the inside, one of the sides of which is parallel to the axis of rotation, and of a value of at most 25°, said carcass reinforcement (1) being reinforced in each bead (3) at least radially to the outside and axially to the inside by at least one first continuous additional layer (6), of meridian profile substantially parallel to the meridian profile of said carcass reinforcement (1) in the bead (3) and comprising at least one first section composed of at least one ply (6₁, 6₂, 6₃) of inextensible reinforcement elements forming an angle of between -2.5° and +2.5° with the circumferential direction, the radially upper end of said additional ply being distant from the axis of rotation by an amount at least equal to 0.96 times the distance between said axis and that point of the corresponding flange of the mounting rim which is farthest from said axis of rotation, and the axially inner end being distant from the equatorial plane by an amount at most equal to 0.43 times the width L of the mounting rim.

2. A tyre according to Claim 1, **characterised in that** the meridian profile of the carcass reinforcement (1) furthermore comprises, radially and axially towards the outside, a first, concave, arc of a circle AB, said arc of a circle being extended by the convex arc of a circle BC, and having a value at most equal to the length of an arc of a circle the radially lower end B of which would be the point of tangency of said arc with a line perpendicular to the axis of rotation.

3. A tyre according to Claim 2, **characterised in that** the radially outer end A of the first, concave, arc of a circle AB is the point of tangency of said arc AB with the convex meridian profile of the carcass reinforcement (1) in the sidewall (2), and radially distant from the axis of rotation by an amount equal to the radius of the circle which is the geometric locus of the points of the rim flange which are farthest from said axis, the centre of curvature of said arc AB, relative to the two axes which are the trace of the equatorial plane and the axis of rotation, having the same coordinates as the centre of curvature of the rim hook.

4. A tyre according to Claim 2, **characterised in that** the second arc of a circle BC, which is at a tangent at B to the first arc of a circle AB, has a radius of curvature of between a minimum value of 5 mm and a maximum value equal to the radius of curvature of the meridian profile of the carcass reinforcement (1) in the sidewall (2) measured at the point of tangency A between said profile and the first arc of a circle AB, said maximum value being the value of radius used when the first arc of a circle AB has a length of zero.

5. A tyre according to one of Claims 1 to 4, **characterised in that** the axially inner edge of the meridian profile of the carcass reinforcement, composed of a section of the second arc of a circle BC to which the straight-line segment CD is added, is the section of the meridian profile located in an angle α defined by a half line forming a tangent at S to the second arc of a circle BC and forming with the axis of rotation an angle of 25° and a half line parallel to said axis of rotation, the origin S of which is precisely the point of tangency of the second arc of a circle BC with the half line oriented at 25°.

6. A tyre according to one of Claims 1 to 5, **characterised in that** the first additional layer (6) is composed of two sections, the second section of said layer (6) being located radially to the outside of the straight line parallel to the axis of rotation and at a distance from said axis equal to 0.96 times the distance between said axis and the point of the corresponding flange of the mounting rim farthest from said axis of rotation.

7. A tyre according to Claim 6, **characterised in that** the two sections of the plies of the additional layer (6), superposed on one another, the lengths of which may or may not be the same, are formed of inextensible circumferential metal reinforcement elements.

8. A tyre according to Claim 6, **characterised in that** the second section of said layer (6) is formed of circumferential elements, such that said section is extensible in the circumferential direction, said elements being by themselves extensible, or inextensible but arranged in said section so that the latter is extensible.

9. A tyre according to Claims 1 to 8, **characterised in that** the first additional layer, between its axially inner end and the vertex S of the angle a in which the edge of the carcass reinforcement (1) is located, is separated from said reinforcement by a minimal thickness of rubber mix, which thickness is the total of the thicknesses of the calendering layers facing the two adjacent plies (1) and (6₁) respectively, whereas between said vertex S and the radially upper end the decoupling thickness is between 1.00 and 1.80 times the above minimal thickness.

10. A tyre according to one of Claims 1 to 9, **characterised in that** the carcass reinforcement (1) is reinforced, axially to the outside and radially to the inside of at least the radially innermost and axially outermost ply of the carcass reinforcement (1), by a second additional continuous layer (7), formed of at least one first section (70) of at least one ply of reinforcement elements, having a meridian profile substantially parallel to the meridian profile of said carcass reinforcement (1) in the bead (3), and formed of inextensible circumferential reinforcement elements.

11. A tyre according to Claim 10, **characterised in that** the radially upper end of the additional layer (7) is radially to the inside of the straight line XX' parallel to the axis of rotation of the rim and passing through the point of the rim flange, corresponding to the bead in question, which is farthest from said axis of rotation.

12. A tyre according to Claim 11, **characterised in that** the second additional layer (7) is of homogenous composition formed, in its entirety, of inextensible cables, preferably metal ones, forming an angle of between -2.5° and +2.5° with the circumferential direction.

13. A tyre according to Claim 11, **characterised in that** the second additional layer (7) is formed of two sections, a first section (70) between its radially upper end and a point located approximately between the centre of the arc of a circle BC and the vertex S of the angle α in which the edge of the carcass reinforcement (1) is located, and a second section (71) between said point and its axially inner end, the first section (70) being formed of at least one ply of circumferential, inextensible reinforcement elements, whilst the second section (71) is formed of at least one ply of reinforcement elements, such that said ply has the properties of being only very slightly compressible in the transverse direction and extensible in the circumferential direction.

14. A tyre according to Claim 10, **characterised in that** the radially upper end of the additional layer (7) is radially to the outside of the straight line XX' parallel to the axis of rotation of the rim and passing through the point of the rim hook, corresponding to the bead in question, farthest from said axis of rotation.

15. A tyre according to Claim 14, **characterised in that** the second additional layer (7) is formed of three sections, a first section (70) included between its radially upper end and a point located approximately between the centre of the arc of a circle BC and the vertex S of the angle a in which the edge of the carcass reinforcement (1) is located, a second section (71) included between said point and its axially inner end, and a third section (73) substantially located radially above the straight line parallel to the axis of rotation and passing through that point of the corresponding rim flange which is farthest from said axis of rotation, and extending the first section (70) radially to the outside, the second section (71) and the third section each being formed of at least one ply of reinforcement elements such that the ply has the properties of being only very slightly compressible in the transverse direction and extensible in the circumferential direction.

16. A tyre according to one of Claims 8, 13 or 15, **characterised in that** the reinforcement elements forming the second section of the first additional layer (6) and of the second section (71) of the second additional layer (7) are elastic, continuous, rectilinear reinforcement elements oriented circumferentially, said elements being parallel to each other and practically adjacent in the transverse direction.

17. A tyre according to one of Claims 8, 13 or 15, **characterised in that** the reinforcement elements forming the second section of the first additional layer (6), and the second section (71) of the second additional layer (7) are undulating or zigzag reinforcement elements in the plane of the ply (plies), of circumferential average orientation, having a ratio of amplitude of undulation a to the wavelength which may be between 0.03 and 0.1, said elements being parallel to one another and practically adjacent in the transverse direction.

18. A tyre according to one of Claims 8, 13 or 15, **characterised in that** the ply (plies) forming the second section of the first additional layer (6), and the second section (71) of the second additional layer (7) are formed by rows of discontinuous reinforcement elements, each element having a circumferential length which may be between 0.1 and 1 times the circumferential length of the ply which they form, and the gaps between elements being offset meridianly relative to the gaps of the axially adjacent rows, said rows of elements being parallel to one another and practically adjacent in the transverse direction.

19. A tyre according to Claim 13 or 15, **characterised in that** the reinforcement elements forming the second section (71) of the second additional layer (7) are metal reinforcement elements oriented at an angle of at least 80° relative to the circumferential direction, said elements being circumferentially separated from each other by a distance of at least 0.2 mm.

20. A tyre according to Claim 13 or 15, **characterised in that** the ply (plies) of the second section (71) of the second additional layer (7) are formed of strips of several circumferential reinforcement elements, said strips being circumferentially discontinuous, and the discontinuity gaps between strips forming with the circumferential direction an angle which is different from the angle formed with the same direction by the reinforcement elements of the carcass reinforcement, the difference being at least 10°.

21. A tyre according to Claim 10, **characterised in that** the carcass reinforcement (1) is formed of at most three plies, the second additional layer (7) being located in its entirety axially to the outside and radially to the inside of the radially innermost and axially outermost carcass ply of the carcass reinforcement (1).

22. A tyre according to Claim 10, **characterised in that** the carcass reinforcement (1) is formed of at least four plies, the plies forming the second additional layer (7) being such that two of them tightly surround a group of carcass plies which may be formed of one or more carcass reinforcement plies.

23. A tyre according to one of Claims 1 to 22, **characterised in that** the carcass reinforcement (1) is composed of plies of reinforcement elements forming an angle of at least 85° with the circumferential direction.

24. A tyre according to Claim 1, **characterised in that** the protective rubber layer (5) providing the join to the mounting rim is divided into two sections at the level of the rounded section of the bead: a first section (51) of substantially constant thickness, a second section (52) of triangular shape formed of a rubber mix, the secant modulus of elasticity in tension of which at 10% relative elongation is at least equal to 30 MPa and very much greater than the modulus of the same name of the mix forming the first section.
